## Europäisches Patentamt
## European Patent Office
## Office européen des brevets

(19)

(11) Veröffentlichungsnummer: **0 171 761**
**B1**

(12)

# EUROPÄISCHE PATENTSCHRIFT

(45) Veröffentlichungstag der Patentschrift:
31.05.89

(21) Anmeldenummer: **85109990.3**

(22) Anmeldetag: **06.08.85**

(51) Int. Cl.⁴: **H 04 M 3/36,** H 04 Q 3/545, H 04 Q 11/04

(54) **Schaltungsanordnung für Fernmeldevermittlungsanlagen, insbesondere Fernsprechvermittlungsanlagen, mit informationsverarbeitenden Schaltwerken und die Verkehrsbelastung erkennenden Zählern.**

(30) Priorität: **13.08.84 DE 3429775**

(43) Veröffentlichungstag der Anmeldung:
**19.02.86 Patentblatt 86/8**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**EP-A-0 096 937**
**EP-A-0 121 239**
**FR-A-2 402 904**
**GB-A-2 001 227**

**NTZ ARCHIV, Band 3, Nr. 5, Mai 1981, Seiten 121-127, Berlin, DE; S. HENTSCHKE: "Predictive processor overload control strategies for SPC switching systems"**

(73) Patentinhaber: **Siemens Aktiengesellschaft Berlin und München, Wittelsbacherplatz 2, D-8000 München 2 (DE)**

(72) Erfinder: **Daisenberger, Georg, Dipl.- Ing., Kärntner Platz 3, D-8000 München 21 (DE)**

## Beschreibung

Die Erfindung betrifft eine Schaltungsanordnung für Fernmeldeanlagen, insbesondere Fernsprechvermittlungsanlagen, mit zentralen und/oder teilzentralen informationsverarbeitenden und mit hinsichtlich der Informations-Verarbeitungskapazität eine begrenzte Leistungsfähigkeit aufweisenden Schaltwerken, an die jeweils Serien von Schaltkennzeichen geliefert werden, wobei jede Serie aus einem zeitlich an erster Stelle stehenden Initialschaltkennzeichen und einer Anzahl von individuell zugehörigen und durch jenes angekündigten Nachfolgeschaltkennzeichen besteht und diese Schaltkennzeichen in einer bezüglich der verschiedenen Serien unregelmäßigen Folge zeitlich ineinander verschachtelt eintreffen und den Schaltkennzeichen jeweils einer Serie gleiche Ursprungsadressen beigefügt sind, die den jeweiligen Ursprungsort dieser Schaltkennzeichen angeben und mit zur Ermittlung der Informationsverarbeitungs-Verkehrsbelastung jeweils eines Schaltwerkes und zur Erkennung von Informationsverarbeitungs-Verkehrsüberlastungen und zur Abwehr solcher Überlastungen dienenden Zählern, die durch die Initialschaltkennzeichen vorwärtsgeschaltet und in regelmäßigen, der Informationsverarbeitungs-Kapazität gemäßen Zeitabständen rückwärtsgeschaltet werden, und die bei Erreichen bzw. Überschreitung eines oberen Grenzwertes infolge Vorwärtsschaltung für nachfolgend eintreffende Initialschaltkennzeichen, insbesondere für einen Anteil der nachfolgend eintreffenden Initialschaltkennzeichen und/oder bereits für das zur Entstehung der Überlastsituation führende Initialschaltkennzeichen, ein Abweisungssignal bilden, durch das eine Weitergabe nicht nur des jeweils abgewiesenen Initialschaltkennzeichens sondern auch aller diesen in einer Serie individuell zugehörigen Nachfolgeschaltkennzeichen verhindert wird.

In einer Schaltungsgsanordnug dieser Art, wie sie die DE-A-3 311 875, (EP-A-121 239) bescreibt, wird mit Hilfe des Zählers dafür gesorgt, daß der Zustrom an Initialschaltkennzeichen zu einem Schaltwerk im Mittel einen seiner Informationsverarbeitungs-Kapazität entsprechenden Wert nicht übersteigt. Diesem gemäß ist die Frequenz der Steuerimpulse für die Rückwärtsschaltvorgänge des Zählers festgelegt und eingestellt. Gehen Initialschaltkennzeichen teils in einer dichteren und teils in einer weiteren Folge ein, so wird keines von ihnen von einer Abweisung betroffen, sofern der Zählerstandswert den erwähnten oberen Grenzwert nicht erreicht bzw. übersteigt.

Von Bedeutung ist in diesem Zusammenhang auch die Höhe des erwähnten oberen Grenzwertes in Relation zum Nullstand des Zählers. Diese Höhe ermöglicht es, zufallsbedingte Schwankungen in der Dichte von eintreffenden Initialschaltkennzeichen aufzufangen, das heißt auszugleichen, gerechtfertigt durch die Tatsache, daß die diesen Initialschaltkennzeichen individuell zugeordneten Nachfolgeschaltkennzeichen sowieso hinsichtlich der verschiedenen Serien, zu denen sie gehören, ineinander verstreut sind, wodurch bereits ein Ausgleich hinsichtlich der hauptsächlichen Arbeitsbelastung für das Schaltwerk erzielt ist. Deshalb ist es erforderlich, diesen oberen Grenzwert in eine demgemäß ausreichenden Hohe in Relation zum Nullstand des Zählers festzulegen. Dieser Höhe entspricht eine Anzahl von akzeptierten Initialschaltkennzeichen, sowie eine dementsprechend größere Anzahl von durch das betreffende Schaltwerk noch zu verarbeitenden Schaltkennzeichen. Diese Nachfolgeschaltkennzeichen sind durch die akzeptierten Initialschaltkennzeichen erst angekündigt, stehen im betreffenden Zeitpunkt also noch nicht unmittelbar zur Verarbeitung an; die Initialschaltkennzeichen dagegen stehen bereits unmittelbar zur Verarbeitung an. Sie können aus den betreffenden verbindungsindividuellen Schalteinrichtungen sukzessive abgerufen werden. In der Regel aber sind die Schaltwerke mit Eingangs-Pufferspeichern ausgestattet, in die die Schaltkennzeichen nacheinander eingegeben werden, um in der gleichen Reihenfolge sukzessive von dem betreffenden informationsverarbeitenden Schaltwerk abgerufen zu werden.

Durch die beschriebenen Maßnahmen der Pufferung, der Ankündigung der Nachfolgeschaltkennzeichen durch die Initialschaltkennzeichen und/oder des Abrufens der Schaltkennzeichen von den verbindungsindividuellen Schalteinrichtungen kann also ein Ausgleich hinsichtlich der Schwankungen in der Dichte der Initialschaltkennzeichen im Zustrom zu dem betreffenden Schaltwerk zustandegebracht werden, welchem entsprechend die Höhe des oberen Grenzwertes in Relation zum Nullstand des Zählers festgelegt wird. Um im laufenden Betrieb mit seinen steten, zufallsbedingten Schwankungen den Vorteil dieser ausgleichenden Wirkung mit Hilfe des Zählers optimal nutzen zu können, ist es also erforderlich, den erwähnten oberen Grenzwert ausreichend hoch anzusetzen. Nur dadurch können auch entsprechend größere Schwankungen in der Dichte der eintreffenden Informationsschaltkennzeichen ausgeglichen werden.

Jedoch ergeben sich bei Einschaltung einer Fernsprechvermittlungsanlage Schwierigkeiten, sowie in vergleichbaren Betriebsfällen mit plötzlichen Belastungssprüngen bei vorausgehender Niedriglast, also in Betriebssituationen, in denen ausgehend von einem relativ niedrigen momentanen Zählerstand relativ kurzfristig viele Initialschaltkennzeichen von dem Zähler registriert werden. Da die Anzahl der Nachfolgeschaltkennzeichen aufsummiert ein Mehrfaches gegenüber der Anzahl von zugehörigen Initialschaltkennzeichen beträgt, ergibt sich entsprechend der zeitlichen Häufung von Initialschaltkennzeichen (Dichte) und entsprechend dem mittleren zeitlichen Abstand zwischen Initialschaltkennzeichen und individuell zugehörigen ersten Nachfolgeschaltkennzeichen eine zeitlich verlagerte Häufung an Nachfolgeschaltkennzeichen, die zu erheblichen Überlastungen des betreffenden Schaltwerkes führt, und die mit der eingangs angegebenen regelnden (drosselnden) Wirkung des Zählers nicht schnell genug bewältigt werden kann. Denn diese betrifft unmittelbar nur die Initialschaltkennzeichen, wohingegen die zuvor genannte Überlastung durch die zeitlich verlagerte Häufung der ihnen entsprechenden Nachfolgeschaltkennzeichen entsteht. Eine solche Überlastsituation führt bekanntlich, wenn sie länger andauert, dazu, daß das betreffende Schaltwerk die Ergebnisse seiner Informationsverarbeitungsvorgänge zu spät liefert, oder sogar dazu, daß Nachfolgeschaltkennzeichen überhaupt nicht mehr ordnungsgemäß verarbeitet werden.

Für die Erfindung besteht die Aufgabe, in einer Schaltungsanordnung der eingangs angegebenen Art die auf eine Häufung von Initialschaltkennzeichen folgende Überbelastung eines entsprechenden Schaltwerkes so wirksam wie möglich abzubauen.

Die Erfindung löst die gestellte Aufgabe dadurch, daß eine hohe und zum Erreichen des oberen Grenzwertes führende Dichte von Initialschaltkennzeichen als Signal für eine unmittelbar bevorstehende, durch Nachfolgeschaltkennzeichen erzeugte Informationsverarbeitungs-Verkehrsüberlastung mit Hilfe des Zählers und eines Speichers erfaßt wird, der das Kriterium, daß der Zählerstand sich auf oder unter einem unteren Grenzwert befindet, für eine von einer Beendigung dieses Kriteriums aus bemessene Zeitspanne speichert, indem ein UND-Glied aus diesem von dem Speicher her anstehenden Kriterium und aus einem durch eine Erreichung des oberen Grenzwertes entstehenden Signal ein Überlastankündigungskennzeichen bildet, und daß dieses mittels eines Zeitgliedes für einen durch den mittleren Zeitunterschied zwischen Initialschaltkennzeichen und zugehörigem erstem Nachfolgeschaltkennzeichen oder durch den oberen Bereich des Streubereiches dieses Zeitunterschiedes bemessenen Zeitraum bis über eine Beendigung des Überlastankündigungskennzeichens hinaus weiter aufrechterhalten wird und bei Eintritt der Überlastsituation weiterhin bis zu deren Ende aufrechterhalten wird, und daß das Überlastkennzeichen die Vorwärtsschaltung des Zählers steigert und/oder seine Rückwärtsschaltung vermindert.

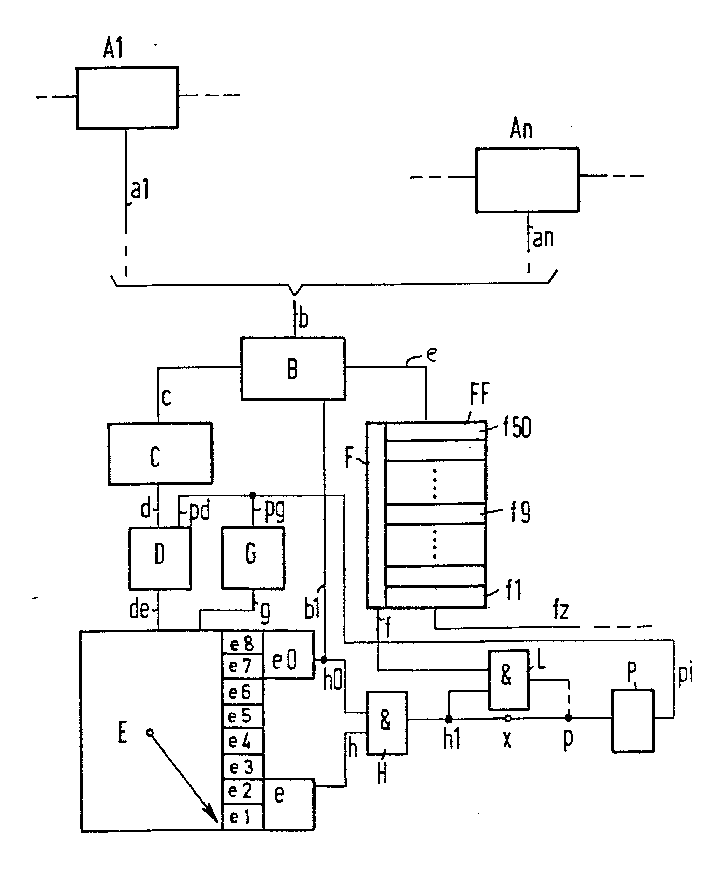

In der Zeichnung ist ein Ausführungsbeispiel der Erfindung nur in wesentlich zu ihrem Veständnis beitragenden Bestandteilen dargestellt. Die Beschreibung setzt zentralgesteuerte Fernsprechvermittlungsanlagen als bekannt voraus, die bereits in großer Vielfalt beschrieben worden sind, zum Beispiel in den deutschen Offenlegungsschriften 3 311 875 (VPA 83 P 1242 DE) und 3 328 571 (VPA 83 P 1557 DE).

In Fernsprechvermittlungsanlagen werden Verbindungen mit Hilfe von verbindungsindividuellen Einrichtungen und über diese sowie über teilnehmerindividuelle Schalteinrichtungen hergestellt. Teilnehmerindividuelle Schalteinrichtungen sind zum Beispiel Teilnehmeranschlußschaltungen; zur Herstellung von Verbindungen dienen als verbindungsindividuelle Schalteinrichtungen Wahlkennzeichenempfänger, Internverbindungssätze, Amtsverbindungssätze von Amtsverbindungsleitungen in Fernsprechnebenstellenvermittlungsanlagen, Leitungsabschlußschaltungen von Orts- und Fernverbindungsleitungen und dergleichen.

Bei der Herstellung von Verbindungen treffen in teilnehmerindividuellen sowie verbindungsindividuellen Schalteinrichtungen Informationen ein, die durch das Zentralsteuerwerk der betreffenden Fernsprechvermittlungsanlage, bzw. durch eines seiner Teilsteuerwerke zu verarbeiten sind. Die zuvor verwendete Bezeichnung "Zentralsteuerwerk" stellt eine Vereinfachung in der Bezeichnungsweise dar; hierbei handelt es sich vorzugsweise um einen Koordinationsprozessor. Das gesamte Steuerungsgeschehen ist so weit wie möglich dezentralisiert und auf Teilsteuerwerke verteilt.

Die in teilnehmerindividuellen und verwendungsindividuellen Schalteinrichtungen eintreffenden Informationen stellen für das Zentralsteuerwerk Informations-Verarbeitungsanforderungen dar, wobei es um die Herstellung, Aufrechterhaltung und Beendigung von individuellen Nachrichtenverbindungen, zum Beispiel Fernsprechverbindungen, geht, sowie um eine korrekte Verarbeitung von Gebührenzählinformationen, zum Beispiel Gebührenzählimpulsen. Bei Informations-Verarbeitungsanforderungen seitens Teilnehmerstellen kann es sich um den die Herstellung einer Verbindung einleitenden Teilnehmeranruf oder auch um anschließend abgegebene Wahlkennzeichen, die den einzelnen Ziffern einer Rufnummer entsprechen mögen, handeln. Bei Informations-Verarbeitungsanforderungen, die von einer Leitungsabschlußschaltung einer ankommend belegten Verbindungsleitung eintreffen, kann es sich um das Schaltkennzeichen einer ankommenden Belegung oder um eintreffende Wahlkennzeichen handeln. Wird eine Verbindungsleitung abgehend belegt, so können entgegen der Verbindungsherstellungsrichtung das Wahlendekennzeichen, das Beginnzeichen sowie Gebührenzählimpulse eintreffen. Diese Schaltkennzeichen treffen also in einer Leitungsabschlußschaltung einer abgehend belegten Verbindungsleitung ein und haben ebenfalls Informations-Verarbeitungsanforderungen zur Folge, die die jeweils belegte Leitungsabschlußschaltung zum betreffenden Zentralsteuerwerk bzw. Teilsteuerwerk hin abgibt.

Die durch jedes der zuvor aufgeführten Schaltkennzeichen verursachten Informations-Verarbeitungsanforderungen gehen also auf lauter einzelne Schaltkennzeichen zurück, die vom Beginn einer Verbindungsherstellung bis zur vollständigen Herstellung einer Verbindung, ferner während des Bestehens derselben Verbindung sowie bis zu deren endgültiger Auslösung in den verschiedenen Schalteinrichtungen eintreffen. Alle Schaltkennzeichen, die jeweils zu einer einzigen Verbindung gehören, bilden jeweils eine Serie. Das erste Schaltkennzeichen einer solchen Serie ist ein Initialschaltkennzeichen. Eine Serie von Schaltkennzeichen besteht außer dem zeitlich an erster Stelle stehenden Initialschaltkennzeichen aus einer Anzahl von individuell zugehörigen und durch das betreffende Initialschaltkennzeichen angekündigten Nachfolgeschaltkennzeichen. Die zu den verschiedenen Verbindungen gehörenden Schaltkennzeichen treffen nun bei der jeweiligen Fernmeldevermittlungsanlage in einer bezüglich der verschiedenen Serien unregelmäßigen Folge und bezüglich der verschiedenen Serien zeitlich ineinander verschachtelt ein. In der gleichen Weise (hinsichtlich der unregelmäßigen Folge und der Verschachtelung ineinander) gehen diese Schaltkennzeichen unverändert oder - vorzugsweise - nach einer geeigneten Umsetzung bei dem betreffenden Zentralsteuerwerk ein und stellen hier Informations-Verarbeitungsanforderungen dar.

Alle Schaltkennzeichen haben einen bestimmten Herkunftsort. Sie stammen jeweils von einer der verbindungsindividuellen Schalteinrichtungen. Jede derselben ist durch eine eigene Ursprungsadresse bezeichnet. Jedem Schaltkennzeichen bzw. jeder Verarbeitungsanforderung ist die betreffende Ursprungsadresse beigefügt. Folglich weisen alle Schaltkennzeichen jeweils einer Serie gleiche Ursprungsadressen Zentralsteuerwerke bzw. Teilsteuerwerke sind also zentrale bzw. teilzentrale informationsverarbeitende Schaltwerke; sie weisen hinsichtlich der Informations-Verarbeitungskapazität eine begrenzte Leistungsfähigkeit auf. Der Anfall von auf ein solches Steuerwerk treffenden Informations-Verarbeitungsanforderungen ist zufallsbedingt und vom jeweiligen Teilnehmerverhalten jedes der an der Vielzahl der betreffenden Verbindungen beteiligten Teilnehmer abhängig und unterliegt in bekannter Weise einer statistischen Verteilung. Die Informations-Verarbeitungsbelastung stellt eine demgemäß stets schwankende Größe dar. Das Zentralsteuerwerk einer Fernmeldevermittlungsanlage bzw. die betreffenden Teilsteuerwerke, die hinsichtlich der Informations-Verarbeitungskapazität naturgemäß eine endliche Leistungsfähigkeit haben, sind hinsichtlich ihrer Leistungsfähigkeit dem jeweils auftretenden Bedarf angepaßt. Eine solche Anpassung der Informations-Verarbeitungskapazität an die stets schwankende Informations-Verarbeitungsbelastung unterliegt verschiedenen Forderungen. Erstens soll eine möglichst hohe Auslastung eines zentralen bzw. teilzentralen informationsverarbeitenden Schaltwerkes erzielt werden, damit im Hinblick auf den investierten hohen Aufwand eine möglichst große Wirtschaftlichkeit erzielt wird. Zweitens muß sichergestellt werden, daß der Bedarf an Informations-Verarbeitungskapazität so befriedigt wird, daß nur bei extremer Spitzenbelastung allenfalls ein vernachlässigbar kleiner Prozentsatz von herzustellenden Verbindungen wegen Überschreitung der Informations-Verarbeitungskapazität "zu Verlust geht"; das heißt, von den betreffenden gewünschten Verbindungen kann bei Überlastung ein kleiner Teil nicht hergestellt werden, und die jeweils rufenden Teilnehmer erhalten hierüber ein Hörsignal, zum Beispiel Besetztton.

Aus den zuvor erläuterten Gründen werden in Zusammenhang mit Zentralsteuerwerken bzw. Teilsteuerwerken Einrichtungen zur Ermittlung der Informztionsverarbeitungs-Verkehrsbelastung jeweils eines solchen Steuerwerkes und zur Erkennung von Informationsverarbeitungs-Verkehrsüberlastungen und zur Abwehr solcher Überlastungen vorgesehen. Solche Einrichtungen werden unter anderem auch als Zähler ausgebildet, die durch die eintreffenden Schaltkennzeichen vorwärtsgeschaltet und in regelmäßigen, der Informations-Verarbeitungskapazität gemäßen Zeitabständen wieder rückwärts geschaltet werden. Der momentan gegebene Zählerstandswert kann als ein Meßwert für die jeweils augenblicklich gegebene Informationsverarbeitungs-Verkehrsbelastung gewertet werden.

Wie bereits ausgeführt wurde, werden die Informations-Verarbeitungsanforderungen darstellenden Schaltkennzeichen in Initialschaltkennzeichen einerseits und Nachfolgeschaltkennzeichen andererseits unterschieden. Jeweils eine verbindungsindividuelle Serie von Schaltkennzeichen besteht aus einem zeitlich an erster Stelle stehenden Initialschaltkennzeichen; die weiteren Schaltkennzeichen sind Nachfolgeschaltkennzeichen. Sämtliche Schaltkennzeichen tragen zur Informationsverarbeitungs-Verkehrsbelastung des betreffenden Zentralsteuerwerkes bzw. Teilsteuerwerkes bzw. Initialschaltkennzeichen und Nachfolgeschaltkennzeichen stehen - gerechnet für die Gesamtheit der herzustellenden, aufrechtzuerhaltenden, zu zählenden (Gebührenzählung) und auszulösenden Verbindungen - in einem bestimmten mittleren Zahlenverhältnis. Deshalb können zur Ermittlung der Informationsverarbeitungs-Verkehrsbelastung anstelle sämtlicher eingehender Schaltkennzeichen auch die Initialschaltkennzeichen der der Ermittlung der Informationsverarbeitungs-Verkehrsbelastung dienenden Zählung zugrundegelegt werden. Dies hat den Vorteil, daß die ein Zentralsteuerwerk treffende Informationsverarbeitungs-Verkehrsbelastung zu einem relativ frühen Zeitpunkt mit Hilfe der beschriebenen Zählung erkannt werden kann; die auf ein Zentralsteuerwerk zu kommende Informationsverarbeitungs-Verkehrsbelastung kann infolge einer Zählung nur der Initialschaltkennzeichen bereits zu einem früheren Zeitpunkt erkannt werden, als die betreffende Informationsverarbeitungs-Verkehrsbelastung tatsächlich auftritt. Dies ergibt sich daraus, daß die in Zusammenhang mit einem Initialschaltkennzeichen eintreffenden, individuell zugehörigen Nachfolgeschaltkennzeichen erst im zeitlichen Abstand von mehreren Sekunden nach dem Initialschaltkennzeichen eintreffen, was dadurch verursacht ist, daß ein eine Verbindung herstellender Teilnehmer zunächst durch Abnehmen des Hörers an seiner Teilnehmerstation die Abgabe eines entsprechenden Anrufsignales verursacht (Initialschaltkennzeichen), und daß er frühestens erst etwa eine Sekunde danach, in der Regel aber erst mehrere Sekunden danach mit dem Wählen der jeweiligen Teilnehmerrufnummer beginnt.

Durch die Maßnahme, zur Ermittlung der Informationsverarbeitungs-Verkehrsbelastung jeweils eines Zentralsteuerwerkes und zur Erkennung von Informationsverarbeitungs-Verkehrsüberlastungen die erwähnte Zählung auf die Initialschaltkennzeichen zu beschränken, ergeben sich günstige Voraussetzungen zur Abwehr solcher Informationsverarbeitungs-Verkehrsüberlastungen. Eine solche Abwehr erfolgt auf die Weise, daß dann, wenn der Zählerstandswert einen oberen Grenzwert infolge Vorwärtsschaltung erreicht, für nachfolgend eintreffende Initialschaltkennzeichen ein Abweisungssignal gebildet wird, durch das eine Weitergabe nicht nur des jeweils abgewiesenen Initialschaltkennzeichens sondern auch aller diesen in einer Serie individuell zugehörigen Nachfolgeschaltkennzeichen verhindert wird. Diese Abweisungsmaßnahme kommt solange zum Tragen, bis durch die erwähnte Rückwärtsschaltung des betreffenden Zählers der genannte Grenzwert wieder unterschritten wird. Diese Maßnahme der Abweisung von Initialschaltkennzeichen einschließlich der jeweils zugehörigen Nachfolgeschaltkennzeichen kann auf einen Anteil dieser Initialschaltkennzeichen, zum Beispiel 20 %, 25 %,

50 %, 75 oder 80 % beschränkt werden. Die Bildung das Abweisungssignales kann auch bereits für das zur Entstehung der von dem betreffenden Zähler erkannten Überlastsituation führende Initialschaltkennzeichen vorgesehen werden.

Als teilnehmerindividuelle bzw. verbindungsindividuelle Schalteinrichtungen sind in der Zeichnung die Schalteinrichtungen A1 und An dargestellt. Sie können eingangsseitig in an sich bekannter Weise belegt werden; handelt es sich um eine Teilnehmeranschlußschaltung, so ist sie eingangsseitig über die betreffenden Teilnehmeranschlußleitung mit einer Teilnehmerstation fest verbunden.- Über diese Schalteinrichtungen werden ausgangsseitig Verbindungen weiter aufgebaut. Diese Vorgänge sind an sich bekannt und bedürfen hier keiner detaillierten Beschreibung. Für zentralgesteuerte Fernsprechvermittlungsanlagen ist es außerdem bekannt, zentrale oder teilzentrale Abfrageeinrichtungen vorzusehen, mit deren Hilfe einzeln nacheinander die verbindungsindividuellen und teilnehmerindividuellen Schalteinrichtungen angesteuert werden, um sie auf ein Vorliegen eines eingetroffenen Initialschaltkennzeichens oder Nachfolgeschaltkennzeichens abzufragen. Dies ist zum Beispiel in großer Ausführlichkeit in der deutschen Patentschrift 1 537 845 (VPA 67/3047) beschrieben. So werden die in den verbindungsindividuellen bzw. teilnehmerindividuellen Schalteinrichtungen A1 bis An eintreffenden Initialschaltkennzeichen und Nachfolgeschaltkennzeichen in an sich bekannter Weise von einer Abfrageeinrichtung abgefragt und einem Aufnahmeorgan B über einen Informationsweg b zugeführt. Dieses Aufnahmeorgan B des Zentralsteuerwerkes bzw. Teilsteuerwerkes unterscheidet über den Informationsweg b eintreffende Schaltkennzeichen in Initialschaltkennzeichen einerseits und Nachfolgeschaltkennzeichen andererseits. Dieses Aufnahmeorgan führt sämtliche dieser Schaltkennzeichen einem FiFo-Speicher FF zu, der aus einer Anzahl von z. B. 50 Speichereinheiten f1 bis f50 besteht. Die einzelnen Schaltkennzeichen werden zunächst der letzten Speichereinheit f50 zugeführt und wie in einem Schieberegister von Speichereinheit zu Speichereinheit weitergegeben und schließlich der Speichereinheit f1 zugeführt. Über einen Informationsweg fz werden die genannten Schaltkennzeichen sukzessive nacheinander von dem betreffenden Zentralsteuerwerk bzw. Teilsteuerwerk abgerufen und einer entsprechenden Informationsverarbeitung in an sich bekannter Weise zugeführt. Dies geschieht in der gleichen Reihenfolge, wie diese Schaltkennzeichen nacheinander von dem Aufnahmeorgan B aufgenommen und dem FiFo-Speicher FF zugeführt werden. Diese Vorgänge sind an sich bekannt und bedürfen hier keiner weiter ins einzelne gehenden Beschreibung.

Von dem Aufnahmeorgan B werden die über den Informationsweg b eintreffenden Schaltkennzeichen in Initialschaltkennzeichen und Nachfolgeschaltkennzeichen unterschieden; von diesen werden nur die Initialschaltkennzeichen über den Informationsweg c einer Eingabeeinrichtung C zugeführt. Diese gibt mit jedem Initialschaltkennzeichen einen Weiterschalteimpuls über die Informationswege d und de an einen Zähler E, der zur Ermittlung der Informationsverarbeitungs-Verkehrsbelastung des Zentralsteuerwerkes und zur Erkennung von Informationsverarbeitungs-Verkehrsüberlastungen und zur Abwehr solcher Überlastungen dient. Der Zähler E weist eine Anzahl von Zählgliedern e1 bis e8 auf, von denen jeweils immer eines markiert ist, was durch den dargestellten Pfeil angedeutet ist. Im dargestellten Schaltzustand sei das Zahlglied el markiert. - Der Zähler E wird also mit jedem Initialschaltkennzeichen vorwärtsgeschaltet. Dies geschieht über die Informationswege d und de. Der Zähler E wird in regelmäßigen, der Informationsverarbeitungs-Kapazität gemäßen Zeitabständen rückwärtsgeschaltet. Rückwärtsschaltungsimpulse werden hierzu von einem Impulsgeber G über einen Informationsweg g an den Zähler E abgegeben. Die Impulsfrequenz dieser Rückwärtsschaltungsimpulse entspricht der Verarbeitungskapazität; diese wiederum ist entsprechend der Aufeinanderfolge von Informationsverarbeitungsvorgängen durch das Zentralsteuerwerk bemessen.

Durch einen ersten über den Informationsweg de eintreffenden Weiterschalteimpuls wird der Zähler E von einem Nullstand in den dargestellten Schaltzustand weitergeschaltet, in dem also das Schaltglied el markiert ist. Treffen in gleichem mittleren Zeitabstand Weiterschalteimpulse über den Informationsweg de ein, wie auch Rückwärtsschaltungsimpulse über den Informationsweg g vom Impulsgeber G, so wird der Zähler E gleich schnell vorwärtsgeschaltet, wie er zugleich rückwärtsgeschaltet wird. Der Zähler E behält im Mittel seinen derzeitigen Zählerstand. Folgen die Weiterschalteimpulse über den Informationsweg de in kürzeren Abständen als die Rückwärtsschaltungsimpulse, die über den Informationsweg g eintreffen, so wird der Zähler - insgesamt gesehen - sukzessive vorwärtsgeschaltet. Folgen zum Beispiel die Weiterschalteimpulse aufgrund von eintreffenden Initialschaltkennzeichen doppelt so häufig, wie die Ruckwärtsschaltungsimpulse über den Informationsweg g, so wird der Zähler E immer durch zwei Vorwärtsschalteimpulse vorwärtsgeschaltet, während er zugleich mittels nur eines Rückwärtsschaltungsimpulses wieder rückwärts geschaltet wird. Entsprechendes gilt umgekehrt, wenn die Weiterschalteimpulse in geringerer Häufigkeit auf den Zähler E treffen, als die Rückwärtsschaltungsimpulse erreicht der Zähler E durch Erhalt von Rückwärtsschaltungsimpulsen seinen Nullstand, so verbleibt er darin, bis wieder ein Weiterschalteimpuls aufgrund eines Initialschaltkennzeichens über die Informationswege d und de eintrifft.

Folgen die Weiterschalteimpulse für den Zähler E in einer größeren Dichte als die Rückwärtsschaltungsimpulse, so wird der Zähler E insgesamt gesehen mit der Zeit immer weiter vorwärtsgeschaltet. Erreicht dabei sein Zählerstand einen dem Zählglied e7 entsprechenden oberen Grenzwert oder einen noch höheren, dem Zählglied e8 entsprechenden Wert, so wird dies von einer Registriereinrichtung e0 registriert und über einen Informationsweg ho einer UND-Schaltung H gemeldet. Diese Meldung besteht solange und nur solange, wie eines der Zählglieder e7 oder e8 markiert ist, solange also der Zählerstand einen Wert einnimmt, der einem dieser beiden Zählglieder zugeordnet ist. Das Ausgangssignal von der Registriereinrichtung e0 wird außerdem über einen Signalweg b1 als Abweisungssignal dem Aufnahmeorgan B zugeleitet, welches in der bereits oben beschriebenen Weise die Abweisung aller weiteren eintreffenden Initialschaltkennzeichen oder eines Anteiles derselben gegebenenfalls bereits auch des zum Erreichen des genannten Grenzwertes führenden Initialschaltkennzeichens, bewerkstelligt. Das Aufnahmeorgan B fügt den betreffenden Initialschaltkennzeichen jeweils ein dem Abweisungssignal entsprechendes Abweisungskennzeichen bei.

Es ist außerdem ein Speicher e vorgesehen, der eine Markierung eines der Zählglieder e1 bis e3 aufnimmt. Nimmt also der Zählerstand des Zählers E einen Wert ein, der einem der Zählglieder e1 bis e3 entspricht, so nimmt der Speicher e jeweils diese Markierung auf. Der dem Zählglied e3 entsprechende Zählerstand stellt einen unteren Grenzwert hinsichtlich der Informationsverarbeitungs-Verkehrsbelastung des Zentralsteuerwerks dar. Der Speicher e nimmt also das Kriterium, das der Zählerstand sich auf oder unter diesem Grenzwert befindet, auf und speichert dieses Kriterium für eine von einer Beendigung dieses Kriteriums bemessene Zeitspanne. Wird der Zähler E schneller weitergeschaltet, als er rückwärtsgeschaltet wird, so erreicht der Zählerstand des Zählers E Werte, die den Zählgliedern e4, e5 und e6 entsprechen. Wechselt der Zählerstandswert des Zählers E also von dem dem Zählglied e3 entsprechenden Wert zu dem dem Zählglied e4 entsprechenden Wert, so ist mit dem Zeitpunkt dieses Wechsels der Beginn einer festgelegten Zeitspanne gesetzt. Der Speicher e speichert das Kriterium, daß eines der Zählglieder e1 bis e3 markiert ist bzw. war, für die Dauer dieser Zeitspanne.

Der Zähler E gibt das zuvor genannte Kriterium an die UND-Schaltung H ab. Wird nun der Zähler E so weitergeschaltet und ruckwärtsgeschaltet, daß er - insgesamt gesehen - innerhalb der genannten Zeitspanne einen Zählerstandswert erreicht, der dem Zählglied e7 entspricht, so wird von der Registriereinrichtung eo über den Informationsweg ho ein entsprechendes Signal ebenfalls zur UND-Schaltung H abgegeben. Erhält die UND-Schaltung H über die beiden Informationswege h und ho gleichzeitig je ein Kriterium, so ist damit ein Signal erfaßt, welches anzeigt, daß der Zähler E innerhalb der Zeitspanne vier Weiterschalteimpulse mehr erhalten hat, als er innerhalb dieser Zeitspanne Rückwärtsschaltungsimpulse bekommen hat. Dieses Signal zeigt also eine entsprechend hohe und innerhalb der genannten Zeitspanne zum Erreichen des oberen Grenzwertes führende Dichte von Initialschaltkennzeichen an. Dieses Signal kündigt eine unmittelbar bevorstehende, durch Nachfolgeschaltkennzeichen erzeugte Informationsverarbeitungs-Verkehrsüberlastung an; denn diese innerhalb der Zeitspanne zum Erreichen des oberen Grenzwertes im Zähler führende Dichte von Weiterschalteimpulsen aufgrund von Initialschaltkennzeichen macht erkennbar, daß in entsprechendem zeitlichem Abstand später eine gewisse Flut von zugehörigen Nachfolgeschaltkennzeichen im Aufnahmeorgan B eintreffen wird. Mit Hilfe des Zählers E, des Speichers e und der UND-Schaltung H wird ein Überlastankündigungskennzeichen gebildet.

Das genannte Überlastankündigungskennzeichen gelangt über den Informationsweg h1/x/p unverzüglich zu einem Zeitglied P und wird von diesem unverzüglich weitergegeben (über pi) sowie für einen durch den mittleren Zeitunterschied zwischen Initialschaltkennzeichen und zugehörigem erstem Nachfolgeschaltkennzeichen bemessenen Zeitraum bis über eine Beendigung des Überlastankündigungskennzeichens hinaus weiter aufrechterhalten. Dieses Zeitglied gibt bei Erhalt des Überlastankündigungskennzeichens über den Informationsweg p dasselbe also unverzüglich über den Informationsweg pi weiter und hält dasselbe dann, wenn das über den Signalweg p eintreffende Überlastankündigungskennzeichen beendet wird, von dem Zeitpunkt dieser Beendigung an für einige Zeit weiterhin aufrecht; diese Zeit ist durch das Zeitglied P gewährleistet und entspricht dem mittleren Zeitunterschied zwischen Initialschaltkennzeichen und zugehörigem ersten Nachfolgeschaltkennzeichen. Dieser Zeitunterschied kann aber auch etwas größer bemessen werden, und zwar gemäß dem oberen Bereich eines Streubereiches dieses Zeitunterschiedes, der natürlich bei verschiedenen Verbindungsherstellungsvorgängen unterschiedlich groß ist und innerhalb eines gewissen Streubereiches, zum Beispiel von 4 Sekunden, liegt.

Das Überlastankündigungskennzeichen wird - wie bereits erwähnt - über den Informationsweg pi weitergegeben. Es gelangt weiterhin über den Informationsweg pg zum Impulsgeber G. Es bewirkt in diesem, daß die von ihm abgegebenen Rückwärtsschaltungsimpulse während der Dauer des über den Informationsweg pg empfangenen Überlastankündigungskennzeichens mit vergrößertem zeitlichem Abstand an den Zähler E abgegeben werden. Mit Hilfe des Überlastkennzeichens wird also die Rückwärtsschaltung des Zählers E vermindert.

Das Überlastankündigungssignal gelangt von dem Zeitglied P außerdem über den Informationsweg pi/pd zu einer Beschleunigungseinrichtung D und bewirkt in dieser daß die Vorwärtsschaltung des Zählers E aufgrund von Initialschaltkennzeichen gesteigert wird. Die Beschleunigungseinrichtung D gibt bei Erhalt des Überlastankündigungskennzeichens über den Informationsweg pd zum Beispiel aufgrund von vier über den Informationsweg d erhaltenen Impulsen fünf Weiterschalteimpulse über den Informatiohsweg de an den Zähler E ab. Damit wird also die Vorwärtsschaltung des Zählers E gesteigert; der Steigerungsfaktor beträgt in diesem Fall 1,25. Die Steigerungsintensität, die mit der Beschleunigungseinrichtung D erzielt wird, kann jedoch auch kleiner oder größer bemessen werden. Es ist möglich, die erfindungsgemäße Schaltungsanordnung so auszugestalten, daß das Überlastkennzeichen die Vorwärtsschaltung des Zählers mit Hilfe der Beschleunigungseinrichtung D steigert, und daß es zugleich seine Rückwärtsschaltung durch Einflußnahme auf den Impulsgeber G vermindert; es ist jedoch ebenso gut auch möglich, nur die Vorwärtsschaltung des Zählers E zu steigern oder nur seine Rückwärtsschaltung zu vermindern. Das Maß der Steigerung bzw. das Maß der Verminderung kann beliebig gewählt werden und in der Beschleunigungseinrichtung D bzw. im Impulsgeber G festgelegt werden.

Gemäß weiterer Ausbildung der Erfindung kann vorgesehen werden, daß zur Bildung des Überlastankündigungskennzeichens das vom Speicher e her anstehende Kriterium und das bei Erreichung des oberen Grenzwertes im Zähler E entstehende Signal über die Registriereinrichtung eo außerdem mit einem eine geringe momentane Informationsverarbeitungs-Verkehrsbelastung an zeigenden Zusatzkriterium verknüpft wird. In diesem Falle ist die Verbindung der Informationswege h1 und p am Schaltpunkt x aufgetrennt und stattdessen ist die strichpunktiert dargestellte Verbindung an einer weiteren UND-Schaltung L vorgesehen. Das von der UND-Schaltung H über den Informationsweg h1 abgegebene Signal wird also in diesem Falle der UND-Schaltung L zugeführt. Diese erhält außerdem von einer Füllungsgrad-Meßeinrichtung F des FiFo-Speichers FF ein Signal über den Informationsweg f, sofern der FiFo-Speicher relativ leer ist. Die Füllungsgrad-Meßeinrichtung F zeigt also einen relativ niedrigen Füllungsgrad an. Sie möge ein Ausgangssignal über den Informationsweg f zur UND-Schaltung L hin abgeben, wenn höchstens neun Speichereinheiten (f1 bis f9) des FiFo-Speichers FF Schaltkennzeichen (Initialschaltkennzeichen und/oder Nachfolgeschaltkennzeichen) gespeichert haben. Treffen nun unter der Voraussetzung dieser Weiterbildung der Erfindung in der UND-Schaltung L Eingangssignale von der UND-Schaltung H einerseits und von der Füllungsgrad-Meßeinrichtung F her andererseits ein, so gibt die UND-Schaltung L also ein Ausgangssignal zum Zeitglied P hin ab. Unter der Voraussetzung, daß die Schaltungsanordnung also gemäß dieser Weiterbildung der Erfindung ausgestaltet ist, wird also zur Bildung des Überlastankündigungskennzeichens das vom Speicher e her anstehende Kriterium und das bei Erreichung des oberen Grenzwertes entstehende und mittels der Registriereinrichtung eo erfaßte Signal außerdem mit dem eine relativ geringe momentane Informations-Verkehrsbelastung des Zentralsteuerwerks anzeigenden Zusatzkriterium zusätzlich verknüpft, welches von der Füllungsgrad-Meßeinrichtung F des FiFo-Speichers FF über den Informationsweg f zur UND-Schaltung L hin abgegeben wird.

Im Falle der zuvor beschriebenen Weiterbildung der Erfindung setzt die Bildung des Überlastankündigungskennzeichens also voraus, daß der plötzliche rapide Anstieg der Zahl der eintreffenden Initialschaltkennzeichen bei noch relativ leerem FiFo-Speicher erfolgt, was besonders kennzeichnend ist für die Betriebssituation unmittelbar nach einer Einschaltung, also für die Betriebsstartsituation.

Es besteht auch die Möglichkeit, die Füllungsgrad-Meßeinrichtung so auszubilden, daß sie nur die Anzahl der gespeicherten Nachfolgeschaltkennzeichen erfaßt. Unter dieser Voraussetzung würde die Füllungsgrad-Meßeinrichtung das Zusatzkriterium nur abgeben, wenn nur zwei oder drei Nachfolgeschaltkennzeichen im FiFo-Speicher FF gespeichert sind.

Es besteht die Möglichkeit, daß das genannte Zusatzkriterium, welches der UND-Schaltung L über den Informationsweg f zugeführt wird, anstatt von der Füllungsgrad-Meßeinrichtung vielmehr von einem weiteren Zähler gebildet wird, der in der Zeichnung allerdings nicht dargestellt ist. Dieser Zähler wurde das Zusatzkriterium durch Zählung der innerhalb eines Meßzeitraumes, insbesondere der Zeitspanne, eingetroffenen Nachfolgeschaltkennzeichen oder der Initialschaltkennzeichen und der Nachfolgeschaltkennzeichen durch Vergleich des betreffenden Zählergebnisses mit einem Teillastgrenzwert gewinnen wenn dieser unterschritten oder nicht überschritten wird. Dieser Zähler wäre also ähnlich aufgebaut wie der Zähler E; ihm würden aber nicht nur die Initialschaltkennzeichen zugeführt werden, sondern entweder die Initialschaltkennzeichen zusammen mit den Nachfolgeschaltkennzeichen oder nur die Nachfolgeschaltkennzeichen. Dieser Zähler würde also mit ähnlichem Effekt wie die Füllungsgrad-Meßeinrichtung die Betriebssituation einer relativ niedrigen Informationsverarbeitungs-Verkehrsbelastung des Zentralsteuerwerkes erkennen.

Wird nun in der beschriebenen Weise zur Bildung des Überlastankündigungskennzeichens das vom Speicher e her anstehende Kriterium und das bei Erreichung des oberen Grenzwertes im Zähler E entstehende Signal außerdem mit dem eine geringe momentane Informationsverarbeitungs-Verkehrsbelastung anzeigenden Zusatzkriterium verknüpft, so wird damit eine noch höhere Sicherheit für die Erkennung der typischen Betriebsstartsituation für das Zentralsteuerwerk erzielt. Diese Betriebsstartsituation zeichnet sich also dadurch aus, daß vom Einschaltzeitpunkt, also vom Zeitpunkt des Betriebsbeginns des Zentralsteuerwerks ausgehend zunächst nur oder fast nur Initialschaltkennzeichen eintreffen, und daß dieser in einer hohen und zum Erreichen des oberen Grenzwertes im Zähler E führenden Dichte eintreffen, und daß während der ersten Sekunden nach dem Zeitpunkt des Betriebsbeginnes des Zentralsteuerwerkes nur erst sehr wenige Nachfolgeschaltkennzeichen eintreffen, daß also der FiFo-Speicher FF in der Betriebsstartsituation noch einen relativ niedrigen Füllungsgrad aufweist.

Abweichend von der bisherigen Beschreibung kann auch vorgesehen werden, daß das Zusatzkriterium durch eine Zählung von innerhalb eines Meßzeitraumes, insbesondere der Zeitspanne bei leerem FiFo-Speicher eintreffenden Anforderungssignalen des Zentralsteuerwerkes gebildet wird. Solche Anforderungssignale gibt das Zentralsteuerwerk bekanntlich an den FiFo-Speicher ab, wenn es für weitere Informationsverarbeitungsvorgänge bereit ist, wenn es also jeweils ein weiteres Schaltkennzeichen vom FiFo-Speicher über den Informationsweg fz abzurufen versucht. Das Zentralsteuerwerk wiederholt die entsprechenden Anforderungssignale in kurzen Zeitabständen. Gemäß dieser Variante des Ausführungsbeispieles ist also vorgesehen, jeweils innerhalb eines Meßzeitraumes, insbesondere der genannten Zeitspanne die Anforderungssignale zu zählen, die das Zentralsteuerwerk bei gleichzeitig leerem FiFo-Speicher abgibt. Je häufiger der FiFo-Speicher völlig leer ist, umso größer ist die einem entsprechenden Zähler zugeführte Anzahl von Anforderungssignalen, die bei leerem FiFo- vom Zentralsteuerwerk abgegeben werden.

Es ist außerdem auch möglich, die Steigerung der Vorwärtsschaltung des Zählers durch eine Anzahl von zusätzlichen Vorwärtsschaltungs-Zählschritten zu bewerkstelligen, zu denen der Zähler unabhängig von den Schaltkennzeichen veranlaßt wird. Unter dieser Vorasussetzung ist die Beschleunigungseinrichtung D so ausgebildet, daß sie bei Empfang des Überlastankündigungskennzeichens über den Informationsweg pd eine bestimmte Anzahl von zusätzlichen Vorwärtsschaltungszählschritten des Zählers E bewerkstelligt, zu denen dieser Zähler unabhängig von den Initialschaltkennzeichen veranlaßt wird. Mit Hilfe des Überlastankündigungskennzeichens wird - wie erläutert - die Vorwärtsschaltung des Zählers gesteigert und/oder seine Rückwärtsschaltung vermindert.

Während des Bestehens des weiter oben genannten Abweisungssignals eintreffende Initialschaltkennzeichen werden mit einem Abweisungskennzeichen versehen. Dadurch wird bewirkt, daß jedes in dieser Weise mit einem Abweisungskennzeichen versehene Initialschaltkennzeichen nicht an den FiFo-Speicher weitergeleitet wird. Da die Initialschaltkennzeichen auch Daten umfassen, die den jeweiligen Ursprungsort angeben, also die jeweilige teilnehmerindividuelle oder verbindungsindividuelle Schalteinrichtung (A1 bis An), so wird anhand der den jeweiligen Herkunftsort betreffenden Daten bewerkstelligt, daß nicht nur das jeweils mit einem Abweisungskennzeichen versehene Initialschaltkennzeichen sondern auch alle dem betreffenden Initialschaltkennzeichen individuell zugehörigen Nachfolgeschaltkennzeichen, denen ebenfalls jeweils die betreffende Ursprungsadresse beigefügt ist, mit je einem Abweisungskennzeichen versehen werden. Dadurch wird bewirkt, daß immer ganze Serien von Schaltkennzeichen abgewiesen, das heißt dem FiFo-Speicher nicht zugeführt werden. Es ist möglich, daß diese Abweisung im Aufnahmeorgan B stattfindet; es ist ferner möglich, ein Abweisungssignal auch jeweils an diejenige teilnehmerindividuelle oder verbindungsindividuelle Schalteinrichtung abzugeben, die durch die Daten über den Ursprungsort des Initialschaltkennzeichens bezeichnet ist. Dadurch kann erreicht werden, daß nach Abweisung eines Initialschaltkennzeichens die ihm zugehörigen Schaltkennzeichen nicht einmal von der betreffenden teilnehmerindividuellen bzw. verbindungsindividuellen Schalteinrichtung zum Aufnahmeorgan B hin weitergegeben werden.

## Patentansprüche

1. Schaltungsanordnung für Fernmeldeanlagen, insbesondere Fernsprechvermittlungsanlagen, mit zentralen und/oder teilzentralen informationsverarbeitenden und mit hinsichtlich der Informations-Verarbeitungskapazität eine begrenzte Leistungsfähigkeit aufweisenden Schaltwerken, an die jeweils Serien von Schaltkennzeichen geliefert werden, wobei jede Serie aus einem zeitlich an erster Stelle stehenden Initialschaltkennzeichen und einer Anzahl von individuell zugehörigen und durch jenes angekündigten Nachfolgeschaltkennzeichen besteht und diese Schaltkennzeichen in einer bezüglich der verschiedenen Serien unregelmäßigen Folge zeitlich ineinander verschachtelt eintreffen, und den Schaltkennzeichen jeweils einer Serie gleiche Ursprungsadressen beigefügt sind, die den jeweiligen Ursprungsort dieser Schaltkennzeichen angeben und mit zur Ermittlung der Informationsverarbeitungs-Verkehrsbelastung jeweils eines Schaltwerkes und zur Erkennung von Informationsverarbeitungsverkehrsüberlastungen und zur Abwehr solcher Überlastungen dienenden Zählern (E), die durch die Initialschaltkennzeichen vorwärtsgeschaltet und in regelmäßigen, der Informationsverarbeitungs-Kapazität gemäßen Zeitabständen rückwärtsgeschaltet werden, und die bei Erreichen bzw. Überschreitung eines oberen Grenzwertes infolge Vorwärtsschaltung für nachfolgend eintreffende Initialschaltkennzeichen, insbesondere für einen Anteil der nachfolgend eintreffenden Initialschaltkennzeichen und/oder bereits für das zur Entstehung der Überlastsituation führende Initialschaltkennzeichen, ein Abweisungssignal (b1), bilden, durch das eine Weitergabe nicht nur des jeweils abgewiesenen Initialschaltkennzeichens sondern auch aller diesem in einer Serie individuell zugehörigen Nachfolgeschaltkennzeichen verhindert wird,
   dadurch gekennzeichnet,
   daß eine hohe und zum Erreichen des oberen Grenzwertes führende Dichte von Initialschaltkennzeichen als Signal für eine unmittelbar bevorstehende, durch Nachfolgeschaltkennzeichen erzeugte Informationsverarbeitungs-Verkehrsüberlastung mit Hilfe des Zählers (E), und eines Speichers (e), erfaßt wird, der das Kriterium (h), daß der Zählerstand sich auf oder unter einem unteren Grenzwert befindet, für eine von einer Beendigung dieses Kriteriums aus bemessene Zeitspanne speichert, indem ein UND-Glied (H), aus diesem von dem Speicher her anstehenden Kriterium und aus einem durch eine Erreichung des oberen Grenzwertes entstehenden Signal (ho), ein Überlastankündigungskennzeichen (h1) bildet, und daß dieses mittels eines Zeitgliedes (P), für einen durch den mittleren Zeitunterschied zwischen Initialschaltkennzeichen und zugehörigem erstem Nachfolgeschaltkennzeichen oder durch den oberen Bereich des Streubereiches dieses Zeitunterschiedes bemessenen Zeitraum bis über eine Beendigung des Überlastankündigungskennzeichens hinaus weiter aufrechterhalten wird und bei Eintritt der Überlastsituation weiterhin bis zu deren Ende aufrechterhalten wird, und daß das Überlastankündigungskennzeichen die Vorwärtsschaltung des Zählers steigert (D), und/oder seine Rückwärtsschaltung vermindert (G).

2. Schaltungsanordnung nach Anspruch 1, dadurch gekennzeichnet, daß zur Bildung des Überlastankündigungskennzeichens das vom Speicher her anstehende Kriterium und das bei Erreichung des oberen Grenzwertes entstehende Signal außerdem mit einem eine geringe momentane Informationsverarbeitungs-Verkehrsbelastung anzeigenden Zusatzkriterium (f), verknüpft wird (L).

3. Schaltungsanordnung nach Anspruch 2, dadurch gekennzeichnet, daß das Zusatzkriterium (f) durch Zählung der innerhalb eines Meßzeitraumes, insbesondere der Zeitspanne, eingetroffenen Nachfolgeschaltkennzeichen oder der Initialschaltkennzeichen und der Nachfolgeschaltkennzeichen und durch Vergleich des betreffenden Zählergebnisses mit einem Teillastgrenzwert gewonnen wird, wenn dieser unterschritten oder nicht überschritten wird.

4. Schaltungsanordnung nach Anspruch 2, dadurch gekennzeichnet, daß für die Nachfolgeschaltkennzeichen oder für Initialschaltkennzeichen und Nachfolgeschaltkennzeichen ein FiFo-Speicher (FF), vorgesehen ist, dem eine Füllungsgrad-Meßeinrichtung (F), zugeordnet ist.

5. Schaltungsanordnung nach Anspruch 4, dadurch gekennzeichnet, daß das Zusatzkriterium (f) von der Füllungsgrad-Meßeinrichtung (F), abgegeben wird.

6. Schaltungsanordnung nach Anspruch 4, dadurch gekennzeichnet, daß das Zusatzkriterium (f) durch eine Zählung von innerhalb eines Meßzeitraumes, insbesondere der Zeitspanne, bei leerem FiFo-Speicher (FF) eintreffenden Anforderungssignalen (Fz), eines Schaltwerkes gebildet wird.

7. Schaltungsanordnung nach Anspruch 1, dadurch gekennzeichnet, daß die Steigerung der Vorwärtsschaltung (D), des Zählers (E), durch eine Anzahl von zusätzlichen Vorwärtsschaltungs-Zählschritten bewerkstelligt wird, zu denen der Zähler unabhängig von den Schaltkennzeichen veranlaßt wird.

8. Schaltungsanordnung nach Anspruch 1, dadurch gekennzeichnet, daß die Steigerung der Vorwärtsschaltung (D), des Zählers (E), dadurch bewerkstelligt wird, daß die Initialschaltkennzeichen mehrfach, zum Beispiel doppelt, von ihm gezählt werden.

9. Schaltungsanordnung nach Anspruch 1, dadurch gekennzeichnet, daß die Steigerung der Vorwärtsschaltung (D), des Zählers (E), dadurch bewerkstelligt wird, daß auch Initialschaltkennzeichen, die von einem Abweisungssignal betroffen werden, eine Vorwärtsschaltung des Zählers bewirken.

10. Schaltungsanordnung nach Anspruch 1,

dadurch gekennzeichnet, daß die Rückwärtsschaltung (G) des Zählers (E), dadurch vermindert wird, daß der zwischen aufeinander folgenden Rückwärtsschaltbefehlen liegende Zeitabstand vergrößert wird.

**Claims**

1. Circuit arrangement for telecommunication installations, especially for telephone exchanges, comprising central and/or partially central information processors having a limited performance with respect to the information processing capacity, to which in each case series of switching signals are supplied, each series consisting of a chronologically first initial switching signal and a number of individually associated subsequent switching signals announced by the latter, and these switching signals arriving chronologically nested in one another in an irregular sequence with respect to the various series, and there being appended to the switching signals of in each case one series identical source addresses which indicate the respective origin of these switching signals, and comprising counters (E) serving to determine the information processing traffic load of each processor and to detect information processing traffic overloading and to prevent such overloading, which counters are switched forwards by the initial switching signals and are switched backwards at regular intervals according to the information processing capacity, and which form a rejection signal (b1) when an upper limit value is reached or exceeded as the result of forward switching for subsequently arriving initial switching signals, especially for a portion of the subsequently arriving initial switching signals and/or already for the initial switching signal which leads to the overload situation arising, which rejection signal prevents forwarding not only of the initial switching signal rejected in each case but also of all subsequent switching signals individually associated therewith in a series, characterized in that a high density of initial switching signals which leads to the upper limit value being reached is interpreted as a signal for an imminent information processing traffic overloading created by subsequent switching signals with the aid of the counter (E) and a memory (e) which stores the criterion (h) that the counter status is at or below a lower limit value for a time span measured from a termination of this criteria, in that an AND element (H) forms an overload presignal (h1) from this criterion provided by the memory and from a signal (ho) arising as a result of the upper limit value being reached, and in that said overload presignal is further maintained by means of a time element (P) for a period calculated from the average time difference between initial switching signal and associated first subsequent switching signal or from the upper region of the spread of this time difference beyond a termination of the overload presignal and, upon occurrence of the overload situation, is further maintained until the end thereof, and in that the overload presignal increases (D) the forward switching of the counter and/or reduces (G) its backward switching.

2. Circuit arrangement according to Claim 1, characterized in that, for forming the overload presignal, the criterion provided by the memory and the signal arising when the upper limit value is reached is additionally logically combined (L) with an additional criterion (f) indicating a low momentary information processing traffic load.

3. Circuit arrangement according to Claim 2, characterized in that the additional criterion (f) is obtained by counting the subsequent switching signals arriving within a measurement period, especially within the time span, or the initial switching signals and the subsequent switching signals, and by comparing the respective counting result with a partial load limit value when this is not reached or not exceeded.

4. Circuit arrangement according to Claim 2, characterized in that there is provided for the subsequent switching signals or for initial switching signal and subsequent switching signals a fifo memory (FF), to which a utilization level measurement device (F) is assigned.

5. Circuit arrangement according to Claim 4, characterized in that the additional criterion (f) is output by the utilization level measurement device (F).

6. Circuit arrangement according to Claim 4, characterized in that the additional criterion (f) is formed by counting the request signals (fz) of a processor which arrive within a measurement period, especially within the time span, in the case of an empty fifo memory (FF).

7. Circuit arrangement according to Claim 1, characterized in that the increase of the forward switching (D) of the counter (E) is effected by a number of additional forward switching increments for which the counter is activated independently of the switching signals.

8. Circuit arrangement according to Claim 1, characterized in that the increase of the forward switching (D) of the counter (E) is effected in that the initial switching signals are counted by it more than once, for example twice.

9. Circuit arrangement according to Claim 1, characterized in that the increase of the forward switching (D) of the counter (E) is effected in that even initial switching signals which are effected by a rejection signal cause a forward switching of the counter.

10. Circuit arrangement according to Claim 1, characterized in that the backward switching (G) of the counter (E) is reduced in that the interval lying between successive backward switching instructions is increased.

## Revendications

1. Montage pour des installations de télécommunications, notamment pour des centraux téléphoniques, comportant des unités centrales et/ou partiellement centrales de commutation, qui traitent les informations et possèdent une capacité limitée du point de vue du traitement des informations et auxquelles sont envoyés respectivement des séries d'indicatifs de commutation, et dans lequel chaque série est constituée par un indicatif initial de commutation présent en première position dans le temps et un certain nombre d'indicatifs ultérieurs de commutation associés de manière individuelle et annoncés par chaque indicatif initial de commutation, et ces indicatifs de commutation arrivent en étant imbriqués dans le temps selon une suite irrégulière en ce qui concerne les différentes séries, et aux indicatifs de commutation se trouve associée respectivement une série d'adresses d'origine identiques, qui indiquent le lieu respectif d'origine de ces indicatifs de commutation, et comportant des compteurs (E), qui servent à déterminer la charge du trafic en traitement d'informations de chaque unité de commutation et à identifier des surcharges en trafic de traitement d'informations et à lutter contre de telles surcharges, sont commandés dans le sens d'un comptage progressif par les indicatifs initiaux de commutation et sont commandés dans le sens d'un comptage régressif à des intervalles de temps uniformes correspondant à la capacité de traitement en informations, et qui, lorsqu'une valeur limite supérieure est atteinte ou dépassée par suite d'un comptage progressif, forment, pour des indicatifs initiaux de commutation arrivant ultérieurement, notamment pour une partie des indicatifs initiaux de commutation arrivant ultérieurement et/ou déjà pour l'indicatif initial de commutation conduisant à l'apparition de l'état de surcharge, un signal de rejet (b1), qui empêche une retransmission non seulement de l'indicatif initial de commutation respectivement rejeté, mais également de tous les indicatifs ultérieurs de commutation associés individuellement, dans une série, à cet indicatif initial de commutation, caractérisé par le fait qu'une densité élevée d'indicatifs initiaux de commutation, conduisant à ce que la valeur limite supérieure est atteinte, est détectée en tant que signal d'une surcharge en trafic de traitement d'informations, existant immédiatement auparavant et produite par des indicatifs ultérieurs de commutation, à l'aide du compteur (E) et d'une mémoire (e), qui mémorise le critère (4), selon lequel l'état de comptage est égal ou inférieur à une valeur limite inférieure, pendant un intervalle de temps dimensionné par la fin de ce critère, par le fait qu'un circuit ET (H) forme un indicatif (h1) d'annonce d'une surcharge à partir de ce critère tiré de la mémoire et d'un signal (ho) obtenu lors du dépassement de la valeur limite supérieure, et que cet indicatif d'annonce continue à être maintenu au moyen d'un circuit de temporisation (P) pendant un intervalle de temps dimensionné sur la base de la durée moyenne s'écoulant entre un indicatif initial de commutation et un premier indicatif ultérieur associé de commutation ou bien au moyen de la partie supérieure de la gamme de dispersion de cette durée, jusqu'après la fin de l'indicatif d'annonce d'une surcharge, et est en outre maintenu, lors de l'apparition de la situation de surcharge, jusqu'à la fin de cette situation, et que l'indicatif d'annonce d'une surcharge accroît (D) le comptage progressif du compteur et/ou réduit (G) son comptage régressif.

2. Montage suivant la revendication 1, caractérisé par le fait que pour former l'indicatif d'annonce d'une surcharge, le critère tiré de la mémoire et le signal obtenu lorsque la valeur limite supérieure est atteinte sont en outre combinés (L) à un critère additionnel (f) indiquant une faible charge instantanée en trafic de traitement d'informations.

3. Montage suivant la revendication 2, caractérisé par le fait que le critère additionnel (f) est obtenu par comptage des indicatifs ultérieurs de commutation arrivant pendant une durée de mesure, notamment l'intervalle de temps, ou des indicatifs initiaux de commutation et des indicatifs ultérieurs de commutation, et par comparaison du résultat considéré de comptage à une valeur limite de charge partielle, lorsque cette dernière est dépassée vers le bas, mais pas vers le haut.

4. Montage suivant la revendication 2, caractérisé par le fait que pour les indicatifs ultérieurs de commutation ou pour des indicatifs initiaux de commutation et des indicatifs ultérieurs de commutation, il est prevu une mémoire FiFo (FF), à laquelle est associé un dispositif (F) de mesure du degré de remplissage.

5. Montage suivant la revendication 4, caractérisé par le fait que le critère additionnel (f) est délivré par le dispositif (F) de mesure du degré de remplissage.

6. Montage suivant la revendication 4, caractérisé par le fait que le critère additionnel (f) est formé par un comptage de signaux de demande (fz) d'une unité de commutation, qui arrivent pendant une durée de mesure, notamment l'intervalle de temps, lorsque la mémoire FiFo (FF) est vide.

7. Montage suivant la revendication 1, caractérisé par le fait que l'accroissement du comptage progressif (D) du compteur (E) est obtenu au moyen d'un nombre de pas additionnels de comptage dans le sens progressif, pour lesquels le compteur est commandé, indépendamment des indicatifs de commutation.

8. Montage suivant la revendication 1, caractérisé par le fait que l'accroissement du comptage progressif (D) du compteur (E) est obtenu grâce au fait que les indicatifs initiaux de commutation sont comptés plusieurs fois, par exemple en double, par le compteur.

9. Montage suivant la revendication 1, caractérisé par le fait que l'accroissement du comptage progressif (D) du compteur (E) est obtenu grâce au fait que des indicatifs initiaux de commutation, qui sont concernés par un signal de rejet, déclenchent également un comptage progressif du compteur.

10. Montage selon la revendication 1, caractérisé en ce que le comptage régressif (G) du compteur (E) est réduit grâce à un accroissement de l'intervalle de temps entre des instructions successives de comptage régressif.

EP 0 171 761 B1

1